# FASCICULE DE BREVET EUROPEEN

(11) **EP 2 117 818 B1**
(45) Date de publication et mention de la délivrance du brevet: **22.09.2010**
(21) Numéro de dépôt: 08775580.7
(22) Date de dépôt: 21.02.2008
(51) Int. Cl.: B29C 70/38, B65H 57/12, B29K 105/08

(54) **MACHINE D'APPLICATION DE FIBRES AVEC TUBES FLEXIBLES D'ACHEMINEMENT DE FIBRES**
FASERAPPLIKATIONSMASCHINE MIT FLEXIBELEN FASERZUFUHRSCHLÄUCHEN
FIBRE APPLICATION MACHINE WITH FLEXIBLE FIBRE SUPPLY TUBES

(30) Priorité: 28.02.2007 FR 0701453
(43) Date de publication de la demande: 18.11.2009
(73) Titulaire: Coriolis Composites, 69001 Lyon (FR)
(72) Inventeur: HAMLYN, Alexander, F-56270 Ploemeur (FR); HARDY, Yvan, F-56100 Lorient (FR)
(74) Mandataire: Hays, Bertrand
(86) Numéro de dépôt international: PCT/FR2008/000224
(87) Numéro de publication internationale: WO 2008/122709

(56) Documents cités:
- EP-A- 1 177 871
- EP-A- 1 342 555
- FR-A- 2 882 681
- US-A1- 2002 090 408

## Description

La présente invention concerne une machine d'application de fibres pour la réalisation de pièces en matériaux composites, et plus particulièrement des moyens d'acheminement de fibres particuliers d'une telle machine pour acheminer les fibres entre des moyens de stockage de fibres et la tête d'application.

Il est connu des machines d'application de fibres, appelées couramment machines de placement fibres, pour l'application sur un moule d'une bande large formée de plusieurs fibres plates, de type rubans, imprégnées de résine, notamment des fibres de carbone imprégnées d'une résine thermodurcissable ou thermoplastique. Ces machines comprennent un système de déplacement d'une tête d'application de fibres, ladite tête comportant un rouleau d'application destiné à venir en contact contre le moule pour appliquer la bande et des moyens de guidage des fibres sur ledit rouleau d'application, des moyens de stockage de fibres, et des moyens d'acheminement des fibres desdits moyens de stockage vers la tête d'application.

Les moyens d'acheminement sont généralement formés d'une pluralité de poulies embarquées sur les différents axes d'un système de déplacement de type portique. Les moyens de stockage, formés d'un cantre pour bobines de fibres, sont également embarqués sur le système de déplacement au plus près de la tête de placement. Ces différents éléments embarqués sont encombrants et lourds, et limitent la vitesse d'application des fibres. Ces machines ne permettent pas de placer des fibres dans des pièces de petites dimensions ou sur certains moules femelles du fait de l'encombrement et des courses limitées des différents axes.

Dans le document brevet FR-A-2 882 681, qui décrit une machine d'application de fibres selon le préambule de la revendication 1, il a été proposé d'utiliser des moyens d'acheminement formés de tubes flexibles reliant les moyens de stockage à la tête d'application, chaque tube flexible étant apte à recevoir une fibre dans son passage interne. Les tubes flexibles sont fixés par leurs extrémités à la tête d'application et aux moyens de stockage respectivement par des moyens de fixation amont et aval, et présentent une longueur et une flexibilité suffisantes pour ne pas limiter les mouvements du système de déplacement de la tête.

De tels tubes flexibles forment des moyens d'acheminement simples de conception, d'encombrement et de coûts réduits, permettant d'obtenir des vitesses de défilement élevées, de déporter les moyens de stockage du système de déplacement, de supprimer les systèmes motorisés de récupération de mou pour les bobines de fibres, d'isoler les fibres de l'extérieur, et de simplifier le système de déplacement de la tête d'application, notamment d'utiliser un système de déplacement tel qu'un bras poly-articulé de type robot six axes. Ces tubes flexibles sont avantageusement associés à un système limiteur de tension, décrit en détails dans le document brevet précité, apte à exercer un effort de traction sur les fibres provenant des moyens de stockage et limiter ainsi la tension d'appel des fibres au niveau du rouleau d'application.

Ces tubes flexibles ne peuvent toutefois éviter que les fibres ne se retournent lors de certains déplacements du robot, en raison de flexion trop importantes des tubes flexibles et/ou de frottements trop importants des fibres dans les tubes flexibles.

Le but de la présente invention est de proposer une machine palliant les inconvénients précités, qui soit simple de conception et peu encombrante, tout en garantissant un bon acheminement des fibres.

A cet effet, la présente invention a pour objet une machine d'application de fibres selon la revendication 1.

Selon l'invention, chaque tube flexible est équipé d'une lame flexible limitant ou interdisant la flexion transversale du tube dans le plan de la lame, ce qui permet de supprimer, ou tout au moins limiter, les risques de retournement de la fibre disposée dans le passage interne du tube flexible parallèlement à la lame. Le tube flexible peut effectuer des mouvements de flexion dans une direction perpendiculaire au plan de la lame et des mouvements de torsion pour permettre le déplacement de la tête de placement de fibres dans toutes les directions.

Selon un mode de réalisation, ladite lame flexible est métallique et est solidaire d'un tube flexible en matériau plastique, de préférence de polyéthylène haute densité, mieux encore de polyéthylène haute densité antistatique. La lame flexible peut être assemblée sur la surface extérieure du tube flexible par des moyens d'assemblage, par exemple au moyen de ruban adhésif. En variante; la lame flexible est noyée dans la paroi du tube, par exemple lors de l'extrusion du tube.

Avantageusement, les tubes flexibles ont une section rectangulaire, la lame flexible étant disposée le long d'un des deux côtés de grande dimension du tube flexible.

Avantageusement, les moyens d'acheminement comprennent en outre des moyens de fluidisation aptes à fluidiser une fibre lors de son transport dans le passage interne d'un tube flexible. Selon un mode de réalisation, les moyens de fluidisation comprennent des moyens d'injection d'air aptes à injecter de l'air, ou tout autre type de gaz, dans le passage interne de chaque tube flexible, au niveau de sa partie d'extrémité aval, pour créer un flux d'air dans la direction de transport des fibres. Le flux d'air est de préférence climatisé, à savoir régulé en température et/ou en hygrométrie, et purifié pour éviter toute pollution des fibres. Les moyens de fluidisation peuvent également comprendre des moyens de vibration aptes à faire vibrer lesdits tubes flexibles. Avantageusement, lesdits moyens de fluidisation sont montés sur les moyens de fixation amont.

Les tubes flexibles sont de préférence fixés en au moins une rangée par leurs parties extrémités à la tête d'application et aux moyens de stockage respectivement par des moyens de fixation communs amont et aval, pour recevoir et délivrer des fibres sous forme de nappe.

Lesdits moyens de fixation communs amont et aval comprennent, par exemple, chacun deux plaques assemblées l'une à l'autre et entre lesquelles les tubes équipés de leur lame sont coincés en une rangée sensiblement bord à bord, les deux plaques étant assemblées par une liaison souple de type silentbloc à la machine.

Selon un mode de réalisation, la machine comprend au moins un système limiteur de tension entre la tête d'application et les moyens de stockage, pour exercer un effort de traction sur les fibres, et ainsi limiter la tension d'appel des fibres au niveau de la tête d'application, les tubes flexibles comprenant des premiers tronçons fixés en extrémité aux moyens de stockage et au système limiteur, respectivement par des premiers moyens de fixation communs amont et aval, et des seconds tronçons fixés en extrémité au système limiteur et à la tête d'application de fibres respectivement par des seconds systèmes de fixation communs amont et aval.

Le système de déplacement est apte à déplacer la tête d'application selon au moins trois directions perpendiculaires les unes aux autres. Ledit système de déplacement comprend avantageusement un robot comprenant un poignet ou bras poly-articulé à l'extrémité duquel est montée ladite tête d'application. Le système de déplacement peut être formé par un bras poly-articulé de type robot standard six axes, disposé au sol ou monté sur axe linéaire ou un portique.

Les moyens de stockage de fibres peuvent comprendre un cantre dans le cas de fibres conditionnées sous forme de bobines et/ou des étagères dans le cas de fibres conditionnées sous forme de pelotes ou dans des cartons. Ces moyens de stockage peuvent être disposés au sol, par exemple dans le cas d'un robot standard fixe, ou être montés sur un élément du système de déplacement, par exemple sur un chariot suiveur coulissant sur l'axe linéaire du robot.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence aux dessins schématiques annexés sur lesquels :
- la figure 1 est une vue schématique de côté d'une machine de placement selon l'invention ;
- les figures 2 et 3 sont respectivement une vue partielle en perspective et une vue en coupe transversale d'un tube flexible d'acheminement selon l'invention ;
- la figure 4 est une vue schématique en perspective d'un système de fixation amont de tubes flexibles ; et,
- la figure 5 est une vue en coupe selon le plan V-V du système de fixation amont de la figure 4.

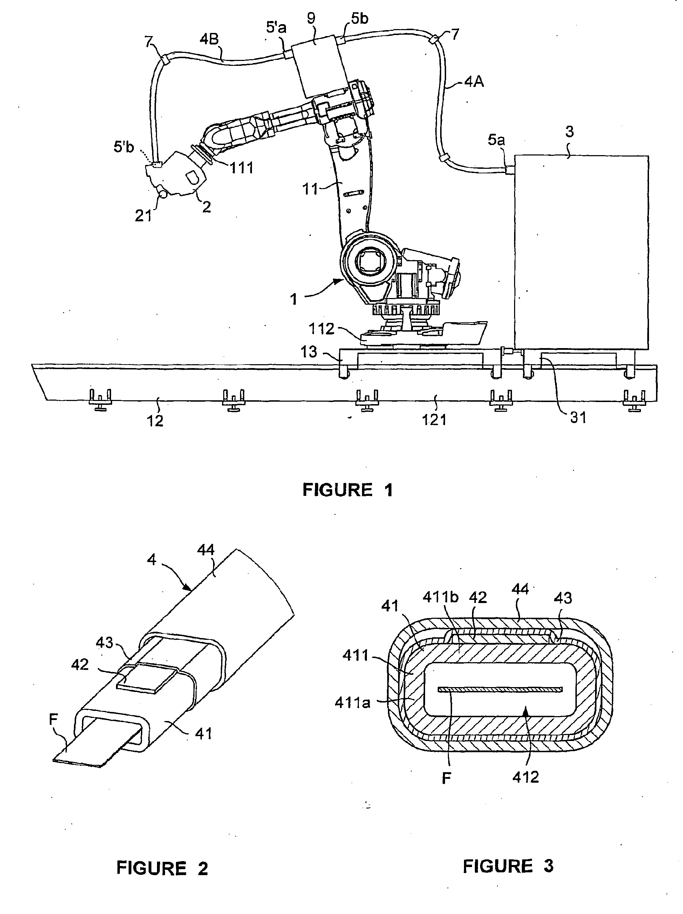

En référence à la figure 1, la machine de placement comprend un système de déplacement 1 formé d'un bras poly-articulé 11, du type robot six axes, connu en soi, monté mobile sur un axe linéaire 12, une tête d'application 2 montée au poignet d'extrémité 11a du bras poly-articulé, des moyens de stockage 3 de fibres, des moyens d'acheminement 4A, 4B pour acheminer des fibres depuis lesdits moyens de stockage vers la tête d'application, et au moins un système limiteur de tension 9.

Le bras poly-articulé 11 est fixé par son embase 112 sur un chariot 13 monté coulissant sur l'axe linéaire 12, ledit axe linéaire étant constitué de deux rails 121 parallèles fixés au sol. Le chariot est équipé de moyens d'entraînement, par exemple de type galets motorisés, asservis par une unité de commande pour le déplacement de la tête de placement le long de ces rails.

La tête d'application de fibres 2, appelée également tête de placement de fibres, comprend de manière connue, un rouleau d'application 21 apte à venir en contact avec un moule pour appliquer une bande formée de plusieurs fibres pré-imprégnées de résine.

La machine est prévue pour l'application de fibres, par exemple de type fibres de carbone F, conditionnées sous forme de bobines. Les moyens de stockage sont formés d'un cantre, schématiquement représentée sous la référence 3, pour recevoir les bobines de fibres. Chaque bobine est montée sur un mandrin du cantre, avantageusement équipé d'un système de freinage automatique asservi en boucle fermée en fonction de la tension de la fibre, tel que décrit dans le document brevet EP 697990. Le cantre est également monté sur un chariot suiveur 31, disposé sur les rails 121 et relié mécaniquement au chariot 13 portant le robot.

Un ou plusieurs systèmes limiteurs de tension, tels que décrits en détails dans le document brevet W02006/092514 précité, comprenant un ensemble de cylindres parallèles motorisés sur lesquels les fibres passent sans en faire le tour, peuvent être prévus entre le cantre et la tête d'application pour réduire la tension des fibres au niveau du rouleau. Dans ce mode de réalisation, un système limiteur de tension 9 est monté sur le bras poly-articulé du robot.

La machine comprend une unité de commande (non représentée) pour commander les déplacements du robot selon des séquences programmées, la tête de placement de fibres, notamment les vérins de systèmes de coupe individuelle et de systèmes de réacheminement, ainsi que le système limiteur de tension. Les circuits électriques, pneumatiques et/ou hydrauliques pour la commande de la tête de placement sont disposés dans un tuyau (non représenté) s'étendant de la tête de placement à l'unité de commande, le long du bras du robot.

Les moyens d'acheminement comprennent des tubes flexibles tels que décrits dans le document brevet précité, mais chaque tube flexible est, salon l'invention, équipé d'une lame flexible de rigidification.

Les fibres sont acheminées individuellement dans des tubes flexibles du cantre 3 à la tête dé placement de fibres 2. Les fibres passent dans des premiers tronçons de tube flexible, dit premiers tubes, fixés en extrémités au cantre 3 et au système limiteur 9 respectivement par des premiers systèmes de fixation communs amont 5a et aval 5b, puis dans des seconds tronçons de tube flexible, dit seconds tubes, fixés en extrémité au système limiteur et à la tête de placement de fibre respectivement par des seconds systèmes de fixation communs amont 5'a et aval 5'b. Les premiers et seconds tubes sont rassemblés respectivement en un premier et un second faisceaux représentés schématiquement sous les références 4A et 4B sur la figure 1. Les premiers et seconds tubes sont rassemblés en faisceaux par un ou plusieurs anneaux 7, lesdits anneaux empêchant les tubes de s'écarter les uns des autres mais autorisant des déplacements longitudinaux des tubes les uns par rapport aux autres.

En référence aux figures 2 et 3, chaque tube flexible 41 présente une paroi 411 de section transversale rectangulaire, avec deux petits côtés 411a et deux grands côtés 411b. Chaque tube flexible est équipé extérieurement d'une lame métallique 42 flexible, appelée également clinquant. La lame métallique est assemblée contre la surface extérieure d'un grand côté 411b, sur sensiblement toute la longueur du tube flexible, la lame ayant une largeur inférieure ou égale à celle d'un grand côté, de préférence inférieure. Cet assemblage est réalisé au moyen d'une bande adhésive 43 enroulée de façon hélicoïdale autour du tube flexible et de la lame pour plaquer cette dernière contre le tube flexible. Une gaine de protection 44, par exemple en tissu, recouvre l'ensemble formé par le tube, la lame et la bande adhésive. Le tube flexible ainsi équipé de sa lame et recouvert d'une gaine est désigné par la référence 4.

Chaque tube est destiné à recevoir une fibre plate F dans son passage interne 412 de section rectangulaire, sensiblement parallèlement à ses grands côtés et donc parallèlement à la lame métallique. La lame métallique interdit toute flexion transversale du tube flexible dans le plan de la lame, mais autorise des flexions longitudinales du tube flexible dans une direction perpendiculaire au plan de la lame ainsi que des torsions du tube flexible. Lors des déplacements du robot pour les opérations de placement de fibres, les tubes flexibles vont se déformer par flexion perpendiculairement au plan de la lame et/ou torsion, de sorte que la fibre F reste bien à plat parallèlement à la lame métallique.

A titre d'exemple, pour acheminer des fibres de 6,35 mm de large, les tubes ont une section rectangulaire intérieure de 8x2 mm, avec une épaisseur de paroi de 1 mm, soit une section extérieure de 10x4 mm. Les tubes flexibles sont réalisés en un matériau polymère souple adapté pour le transport des fibres, qui ne casse pas les fibres, ne charge pas les fibres en électricité statique, engendre peu de frottement, résiste à l'usure et possède une bonne tenue en fatigue et en flexions répétées. Les tubes flexibles sont par exemple réalisés en un polyéthylène haute densité (PEHD) naturel, comprenant un adjuvant antistatique. En l'absence de lame métallique, ces tubes souples peuvent fléchir transversalement. La lame métallique a une largeur d'environ 5mm, et une épaisseur de l'ordre de 0,5 mm.

En variante, la lame métallique est noyée dans l'épaisseur d'un grand côté de la paroi du tube. Dans un autre mode de réalisation, la lame flexible selon l'invention constitue l'un des grands côtés du tube flexible, ledit tube flexible étant par exemple obtenu par coextrusion de deux matériaux différents dont l'un forme ladite lame flexible.

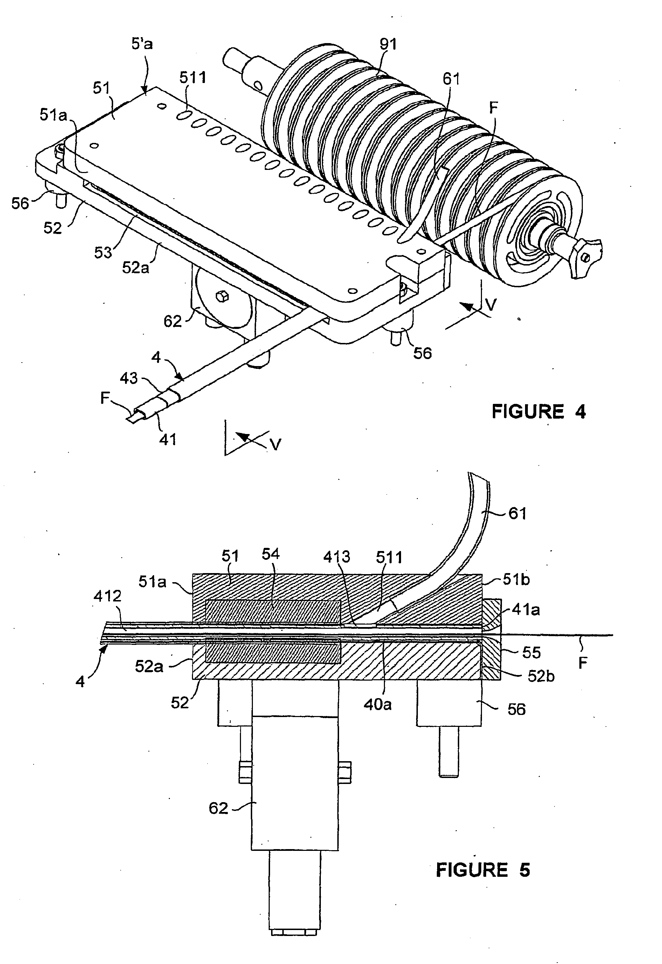

Les figures 4 et 5 illustrent des vues en perspective et en coupe du second système de fixation amont 5'a pour la fixation des seconds tubes au système limiteur. Ce système de fixation amont 5'a comprend deux plaques métalliques, appelées plaque supérieure 51 et plaque inférieure 52, assemblées l'une à l'autre pour coincer entre elles, sensiblement bord à bord en une rangée, les parties d'extrémité 40a des tubes flexibles 4 équipés de leur lame. Les plaques définissent entre elles un passage 53 pour la réception des parties d'extrémité 40a des tubes flexibles, ce passage s'étendant des bords avant 51a, 52a aux bords arrières 51b, 52b des plaques. Chaque plaque comprend un renfoncement transversal dans lequel est logé un bloc 54 en matériau élastomère. Lors de l'assemblage des plaques les blocs sont en vis-à vis et légèrement en saillie dans le passage 53, de sorte que les tubes flexibles soient coincés entre les deux blocs. Les bords d'extrémité 41a des tubes flexible 41 sont alignés et affleurent les bords arrières 51b, 52b des plaques, des oeillets 55 en téflon étant montés sur ces derniers en vis-à-vis des bords d'extrémité des tubes pour faciliter l'entrée des fibres dans les tubes.

Dans le mode de réalisation illustré, le système de fixation permet la fixation d'une rangée de 16 tubes flexibles pour recevoir les fibres d'une nappe de 16 fibres sortant du système limiteur de tension. Le système de fixation est monté par sa plaque inférieure sur le système limiteur de tension, de sorte que les bords d'extrémité des tubes soient disposés en vis-à-vis des poulies de sortie 91 du système limiteur.

Pour améliorer le glissement des fibres dans les tubes flexibles, et ainsi garantir un bon acheminement, le système de fixation 5'a est équipé de moyens de fluidisation pour fluidiser les fibres lors de leur transport dans les tubes. La plaque supérieure 51 comprend un ensemble de canaux 511 débouchant dans le passage 53, en amont des blocs 54. Les parties d'extrémités 40a des tubes flexibles sont montées entre les deux plaques, avec leur lame 42 disposée contre la plaque inférieure, lesdites parties d'extrémité étant dépourvues de lame et de gaine 44 en amont des blocs. Chaque tube est muni d'une ouverture 413 disposée en vis-à-vis d'un canal 511, de sorte que chaque passage interne 412 d'un tube débouche sur un canal, le tube étant dépourvu de bande adhésive au niveau de ladite ouverture. Ces canaux 511 sont alimentés individuellement en air comprimé climatisé par des conduites 61, partiellement représentées sur les figures 4 et 5, reliées à une source d'air comprimé (non représentée), et les canaux sont orientés de manière à former un flux d'air d'amont en aval dans le passage interne des tubes. Dans le cas du transport de fibres pré-imprégnées dont l'aspect collant diminue avec la température, de l'air froid et sec sera avantageusement injecté dans les tubes flexibles.

Pour compléter ce flux d'air, un système vibreur 62, connu en soi, est monté sur la plaque inférieure pour faire vibrer l'ensemble des seconds tubes lors du transport des fibres. Le système de fixation est alors assemblé au système limiteur par des liaisons souples 56 de type silentbloc pour éviter la transmission de vibrations au système limiteur.

Le premier système de fixation amont 5a assemblé au cantre est identique au second système amont 5'a décrit en référence aux figures 4 et 5, et comprend donc également un système vibreur et des moyens d'injection d'air. Les systèmes de fixation avals 5b et 5'b se différencient des systèmes de fixation amonts par le fait qu'ils ne comprennent pas de canaux d'injection d'air ni de système vibreur. Ils sont toutefois assemblés à la tête de placement de fibres et au système limiteur par des liaisons souples.

Dans le cas d'une tête de placement et/ou d'un système limiteur de tension prévus pour recevoir deux nappes de fibres, les tubes flexibles seront bien entendu assemblés en extrémité en deux rangées, par exemple au moyen de deux systèmes de fixation superposés.

En fonction de la longueur des tubes d'acheminement et du type de fibre, un système limiteur supplémentaire peut par exemple être intégré en sortie du cantre et/ou en entrée de tête d'application, les tronçons de tubes flexibles étant alors fixés à ces systèmes limiteurs supplémentaires.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Machine d'application de fibres comprenant un système de déplacement (1) d'une tête d'application de fibres (2), des moyens de stockage de fibres (3), et des moyens d'acheminement (4A, 4B) des fibres desdits moyens de stockage (3) vers la tête d'application (2), lesdits moyens d'acheminement (4A, 4B) comprenant des tubes flexibles (41) reliant les moyens de stockage (31) à la tête d'application (2), chaque tube flexible (41) étant apte à recevoir une fibre dans son passage interne, les tubes flexibles (41) étant fixés en extrémité à la tête d'application (2) et aux moyens de stockage (3) respectivement par des moyens de fixation amont et aval, **caractérisée en ce que** chaque tube flexible (41) est muni d'au moins une lame flexible (42) longitudinale de section transversale rectangulaire, ladite lame flexible étant disposée sensiblement parallèlement au plan de transport de la fibre (F) reçue dans le passage interne (412) du tube flexible.

2. Machine selon la revendication 1, **caractérisée en ce que** ladite lame flexible (42) est métallique et est solidaire d'un tube flexible (41) en matériau plastique.

3. Machine selon la revendication 1 ou 2, **caractérisée en ce que** la lame flexible (42) est assemblée sur la surface extérieure du tube flexible (41) par des moyens d'assemblage (43).

4. Machine selon l'une des revendications 1 à 3, **caractérisée en ce que** les tubes flexibles (41) ont une section rectangulaire, la lame flexible étant disposée le long d'un des deux côtés (411b) de grande dimension du tube flexible.

5. Machine selon l'une des revendications 1 à 4, **caractérisée en ce que** les moyens d'acheminement comprennent en outre des moyens de fluidisation (61, 62) aptes à fluidiser une fibre lors de son transport dans le passage interne (412) d'un tube flexible (41).

6. Machine selon la revendication 5, **caractérisée en ce que** les moyens de fluidisation comprennent des moyens d'injection d'air (61) aptes à injecter de l'air dans le passage interne (412) de chaque tube flexible pour créer un flux d'air dans la direction de transport des fibres.

7. Machine selon la revendication 5 ou 6, **caractérisée en ce que** les moyens de fluidisation comprennent des moyens de vibration (62) aptes à faire vibrer lesdits tubes flexibles.

8. Machine selon l'une des revendications 5 à 7, **caractérisée en ce que** lesdits moyens de fluidisation (61, 62) sont montés sur les moyens de fixation amont (5a, 5'a).

9. Machine selon l'une des revendications 1 à 8, **caractérisée en ce que** les tubes flexibles (41) sont fixés en au moins une rangée par des moyens de fixation communs amont (5a, 5'a) et aval (5b, 5'b).

10. Machine selon la revendication 9, **caractérisée en ce qu'**elle comprend au moins un système limiteur de tension (9) entre la tête d'application (2) et les moyens de stockage (3) pour exercer un effort de traction sur les fibres (F), les tubes flexibles comprenant des premiers tronçons (4A) fixés en extrémité aux moyens de stockage et au système limiteur, respectivement par des premiers moyens de fixation communs amont (5a) et aval (5b), et des seconds tronçons fixés en extrémité au système limiteur et à la tête d'application de fibres respectivement par des seconds systèmes de fixation communs amont (5'a) et aval (5'b).

## Claims

1. Fiber application machine that includes a system (1) for displacing a fiber application head (2), fiber storage means (3), and fiber conveying means (4A, 4B) for conveying fibers from said storage means (3) to the application head (2), said conveying means (4A, 4B) including flexible tubes (41) connecting the storage means (3) to the application head (2), each flexible tube (41) being able to receive one fiber into its inner passage, the flexible tubes (41) being anchored at the end to the application head (2) and to the storage means (3) respectively via upstream and downstream anchoring means, **characterized in that** each flexible tube (41) is fitted with at least one longitudinal flexible blade (42) of rectangular transverse cross-section, said flexible blade being arranged substantially parallel to the plane of transport of the fiber (F) received in the inner passage (412) of the flexible tube.

2. Machine according to claim 1, **characterized in that** said flexible blade (42) is made of metal and is integral with a flexible tube (41) of plastic material.

3. Machine according to claim 1 or 2, **characterized in that** the flexible blade (42) is coupled to the outer surface of the flexible tube (41) by assembly means (43).

4. Machine according to one of claims 1 to 3, **characterized in that** the flexible tubes (41) are of rectangular cross-section, the flexible blade being placed along one of the two large dimension sides (411b) of the flexible tube.

5. Machine according to one of claims 1 to 4, **characterized in that** the conveying means additionally include fluidization means (61, 62) able to fluidize a fiber when it is transported in the inner passage (412) of a flexible tube (41).

6. Machine according to claim 5, **characterized in that** the fluidization means include air injection means (61) able to inject air into the inner passage (412) of each flexible tube so as to create an airflow in the direction of transport of the fibers.

7. Machine according to claim 5 or 6, **characterized in that** the fluidization means include vibration means (62) able to make said flexible tubes vibrate.

8. Machine according to one of claims 5 to 7, **characterized in that** said fluidization means (61, 62) are mounted on the upstream anchoring means (5a, 5'a).

9. Machine according to one of claims 1 to 8, **characterized in that** the flexible tubes (41) are anchored in at least one row by common upstream (5a, 5'a) and downstream (5b, 5'b) anchoring means.

10. Machine according to claim 9, **characterized in** it includes at least one tension limiting system (9) between the application head (2) and the storage means (3) in order to exert a tensile stress on the fibers (F), the flexible tubes including first sections (4A) anchored at the end to the storage means and to the limiting system, via first common upstream (5a) and downstream (5b) anchoring means respectively, and second sections fixed at the end to the limiting system and to the fiber application head via second common upstream (5'a) and downstream (5'b) anchoring systems respectively.

## Patentansprüche

1. Faserapplikationsmaschine mit einer Verlagerungseinrichtung (1) zum Verlagern eines Faserapplikationskopfes (2), Faserspeichermitteln (3), Zuführmitteln (4A, 4B) zum Zuführen der Fasern von den Speichermitteln (3) zu dem Applikationskopf (2), wobei die Zuführmittel (4A, 4B) flexible Rohrleitungen (41) aufweisen, welche die Speichermittel (3) mit dem Applikationskopf (2) verbinden, wobei jede flexible Rohrleitung (41) eine Faser in ihrem Innendurchgang aufnehmen kann, wobei die flexiblen Rohrleitungen (41) am Ende am Applikationskopf (2) und an den Speichermitteln (3) über vorgelagerte bzw. nachgelagerte Befestigungsmittel befestigt sind, **dadurch gekennzeichnet, dass** jede flexible Rohrleitung (41) mit zumindest einem biegsamen länglichen Band (42) mit rechteckförmigem Querschnitt ausgestattet ist, wobei das biegsame Band im wesentlichen parallel zur Transportebene der im Innendurchgang (412) der flexiblen Rohrleitung aufgenommenen Faser (F) angeordnet ist.

2. Maschine nach Anspruch 1, **dadurch gekennzeichnet, dass** das biegsame Band (42) aus Metall besteht und fest mit einer flexiblen Kunststoffrohrleitung (41) verbunden ist.

3. Maschine nach Anspruch 1 oder 2, **dadurch gekennzeichnet, dass** das biegsame Band (42) über Verbindungsmittel an eine Außenfläche der flexiblen Rohrleitung (41) angefügt ist.

4. Maschine nach einem der Ansprüche 1 bis 3, **dadurch gekennzeichnet, dass** die flexiblen Rohrleitungen (41) einen rechteckförmigen Querschnitt aufweisen, wobei das biegsame Band entlang der einen der beiden Breitseiten (411b) der flexiblen Rohrleitung angeordnet ist.

5. Maschine nach einem der Ansprüche 1 bis 4, **dadurch gekennzeichnet, dass** die Zuführmittel ferner Fluidisierungsmittel (61, 62) aufweisen, welche eine Faser bei ihrem Transport in den Innendurchgang (412) einer flexiblen Rohrleitung (41) fluidisieren können.

6. Maschine nach Anspruch 5, **dadurch gekennzeichnet, dass** die Fluidisierungsmittel Lufteinblasmittel (61) aufweisen, welche Luft in den Innendurchgang (412) einer jeden flexiblen Rohrleitung einblasen können, um einen Luftstrom in Fasertransportrichtung zu erzeugen.

7. Maschine nach Anspruch 5 oder 6, **dadurch gekennzeichnet, dass** die Fluidisierungsmittel Vibrationsmittel (62) aufweisen, welche die flexiblen Rohrleitungen vibrieren lassen können.

8. Maschine nach einem der Ansprüche 5 bis 7, **dadurch gekennzeichnet, dass** die Fluidisierungsmittel (61, 62) an vorgelagerten Befestigungsmitteln (5a, 5'a) montiert sind.

9. Maschine nach einem der Ansprüche 1 bis 8, **dadurch gekennzeichnet, dass** die flexiblen Rohrleitungen (41) über gemeinsame vorgelagerte (5a, 5'a) und nachgelagerte (5b, 5'b) Befestigungsmittel in zumindest einer Reihe befestigt sind.

10. Maschine nach Anspruch 9, **dadurch gekennzeichnet, dass** sie zumindest eine Spannungsbegrenzungseinrichtung (9) zwischen dem Applikationskopf (2) und den Speichermitteln aufweist, um eine Zugkraft auf die Fasern (F) auszuüben, wobei die flexiblen Rohrleitungen erste Abschnitte (4A) aufweisen, die über gemeinsame vorgelagerte (5a) bzw. nachgelagerte (5b) erste Befestigungsmittel am Ende an den Speichermitteln und an der Begrenzungseinrichtung befestigt sind, sowie zweite Abschnitte, die über gemeinsame vorgelagerte (5'a) bzw. nachgelagerte (5'b) zweite Befestigungsmittel am Ende an der Begrenzungseinrichtung und am Faserapplikationskopf befestigt sind.
